# EUROPEAN PATENT SPECIFICATION

(11) **EP 4 546 525 B1**
(45) Date of publication and mention of the grant of the patent: **11.11.2026**
(21) Application number: 23843250.4
(22) Date of filing: 11.07.2023
(51) Int. Cl.: H01M 50/24, B60L 50/64, H01M 10/658, H01M 50/105, H01M 50/178, H01M 50/211, H01M 50/249, H01M 50/271, H01M 50/367, H01M 50/502, H01M 50/507

(54) **BATTERY PACK AND VEHICLE INCLUDING SAME**
BATTERIEPACK UND FAHRZEUG DAMIT
BLOC-BATTERIE ET VÉHICULE LE COMPRENANT

(30) Priority: 20.07.2022 KR 20220089570; 27.04.2023 KR 20230055756
(43) Date of publication of application: 30.04.2025
(73) Proprietor: LG Energy Solution, Ltd., Seoul 07335 (KR)
(72) Inventor: HAN, Seung-Won, Daejeon 34122 (KR); PARK, Ju-Hun, Daejeon 34122 (KR); JUNG, Ki-Taek, Daejeon 34122 (KR); HAN, Min-Hee, Daejeon 34122 (KR); KIM, Soo-Youl, Daejeon 34122 (KR)
(74) Representative: Plasseraud IP
(86) International application number: PCT/KR2023/009882
(87) International publication number: WO 2024/019399

(56) References cited:
- CN-U- 214 123 964
- CN-U- 216 085 170
- CN-U- 216 085 170
- KR-A- 20160 148 398
- KR-A- 20220 023 191
- KR-A- 20220 101 313
- KR-B1- 102 349 746
- US-A1- 2020 020 901

## Description

### TECHNICAL FIELD

The present disclosure relates to a battery pack, and a vehicle including the same, and more specifically, to a battery pack having excellent safety against thermal events, a battery module, and a vehicle including the same.

### BACKGROUND ART

As the technology development and demand for various mobile devices, electric vehicles, energy storage systems (ESSs), and the like increase significantly, the interest in and demand for secondary batteries as an energy source are rapidly increasing. Nickel cadmium batteries or nickel hydrogen batteries have been widely used as conventional secondary batteries, but recently, lithium secondary batteries having advantages of free charge/discharge, very low self-discharge rate, and high energy density due to little memory effect compared to nickel-based secondary batteries, are widely used.

Such lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte, that is, a battery case.

In general, lithium secondary batteries may be classified into can-type secondary batteries in which electrode assemblies are embedded in a metal can and pouch-type secondary batteries in which electrode assemblies are embedded in a pouch of aluminum laminate sheets, depending on the shape of an exterior material.

Recently, battery packs have been widely used for driving or energy storage in medium/large devices such as electric vehicles and ESSs. An example of a battery pack can be found for instance in CN 216 085 170 U or US 2020/020901 A1. A conventional battery pack includes one or more battery modules and a control unit that controls charge/discharge of the battery pack, inside a pack case. Here, the battery module is configured to include a plurality of battery cells inside a module case. That is, in the case of a conventional battery pack, a plurality of battery cells (secondary batteries) are accommodated inside a module case to form each battery module, and one or more of these battery modules are accommodated inside the pack case to form a battery pack.

**In** particular, pouch-type batteries have advantages in various aspects, such as light weight and less dead space when stacked, but are problematic in that they are vulnerable to external impact and somewhat inferior in assemblability. Therefore, it is common for a battery pack to be manufactured by first modularizing a plurality of cells and then accommodating them inside a pack case.

However, conventional battery packs may be disadvantageous in terms of energy density, assemblability, cooling, and the like due to modularization. Specifically, in the process of modularizing a plurality of battery cells by accommodating them inside a module case, the volume of the battery pack may be unnecessarily increased or the space occupied by the battery cells may be reduced due to various components such as the module case or stacking frame. A battery module is first configured by modularizing a plurality of battery cells and then the battery module is accommodated in a pack case, whereby there is a problem that the manufacturing process of the battery pack becomes complicated. Since the module case is accommodated inside the pack case and the battery cells are accommodated inside the module case, when the heat of the battery cells accommodated inside the module case is discharged to the outside of the pack case through the module case, the cooling efficiency may be reduced and the cooling structure may also be complicated.

Recently, demand for battery packs applied to electric vehicles has been increasing. Since these battery packs have a plurality of battery cells, safety should be managed more strictly. If thermal runaway, ignition, or explosion occurs in some cells within any one battery module, the generated high-temperature gas, flame, or high-temperature internal material may be ejected and thermally propagated to other adjacent battery modules, thereby causing secondary thermal runaway, secondary fire, or explosion, and thus there is a concern that a chain of thermal runaway, ignition, or explosion may occur in cells within the plurality of battery modules. Therefore, there is a great need for a means capable of suppressing or delaying flame transfer between battery modules when a thermal event such as thermal runaway occurs. However, conventional battery packs or battery modules may be vulnerable to thermal events. In particular, if a thermal event occurs inside a battery module or battery pack, a thermal runaway may occur, resulting in flames and, in severe cases, even explosion.

In the case of conventional battery packs or battery modules, a silicon insulating pad or the like is interposed between battery cells to avoid direct contact between cells, thereby delaying thermal propagation by conduction, but the structure thereof may be vulnerable to thermal propagation by convection in space.

Moreover, each of the battery cells may have its respective electrode leads coupled to a busbar frame assembly for mutual electrical connection, sensing, or the like. In this case, convection is likely to occur in the part where the electrode leads and the busbar frame assembly are present, and thus when a thermal event occurs in a specific battery cell, a problem of thermal propagation due to thermal convection on the electrode lead side may occur.

### DISCLOSURE

### Technical Problem

The present disclosure is designed to solve the problems of the related art, and therefore the present disclosure is directed to providing a battery pack having excellent energy density, assemblability and/or coolability and a vehicle including the same.

The present disclosure is also directed to providing a battery pack capable of improving thermal propagation to ensure excellent safety in the event of a thermal event and a vehicle including the same.

### Technical Solution

The present disclosure provides a battery pack as defined by independent claim 1, a vehicle comprising a battery pack as defined by independent claim 8.

Preferred embodiments are defined in the appended dependent claims. The battery pack includes a plurality of pouch-type battery cells each having an electrode lead; a busbar frame assembly coupled to at least some of the electrode leads of the plurality of pouch-type battery cells; a plurality of cell covers arranged side by side and provided to at least partially surround at least some of the pouch-type battery cells among the plurality of pouch-type battery cells, wherein an end thereof is inserted into the busbar frame assembly; and a thermal barrier interposed between adjacent cell covers, wherein an end of the thermal barrier together with the cell covers is inserted into the busbar frame assembly.

The plurality of cell covers may be configured to support the plurality of pouch-type battery cells in an upright state.

The battery pack may further include a pack case accommodating the pouch-type battery cells in an internal space, wherein at least one of the plurality of cell covers may partially surround the pouch-type battery cell so that at least one side of the wrapped pouch-type battery cell is exposed toward the pack case.

The pouch-type battery cell may have a receiving portion in which the electrode assembly is accommodated and an edge portion around the receiving portion, wherein the cell covers may be configured to surround both sides of the receiving portion and a part of the edge portion of the wrapped pouch-type battery cell.

Here, the cell covers may be provided to cover both sides of the receiving portion and the upper or lower edge portion of the wrapped pouch-type battery cell.

In addition, the cell covers may include a first side cover portion covering one side of the wrapped pouch-type battery cell; a second side cover portion covering the other side of the wrapped pouch-type battery cell; and an upper cover portion connecting the first side cover portion and the second side cover portion and covering an upper end part of the wrapped pouch-type battery cell.

In addition, the first side cover portion and the second side cover portion may be configured to have different sizes.

In addition, adjacent cell covers may be disposed so that the first side cover portions having the same size face each other or the second side cover portions having the same size face each other.

In addition, any one of the first side cover portion and the second side cover portion may be inserted in a form that penetrates the busbar frame assembly, and the other one of the first side cover portion and the second side cover portion may be inserted in a form that does not penetrate the busbar frame assembly.

In addition, any one of the first side cover portion and the second side cover portion may be formed to extend protruding further toward the side where the busbar frame assembly is located than the other one of the first side cover portion and the second side cover portion.

In addition, the busbar frame assembly may be located at the front and rear sides of the plurality of pouch-type battery cells, respectively, and the front and rear ends of the plurality of cell covers may be respectively inserted into the busbar frame assembly.

In addition, the battery pack according to the present disclosure may further include an insulating pad in contact with the surface of the cell covers.

In addition, the cell covers may be configured in a form of bending one plate.

Furthermore, the cell covers may include an insulating coating layer on the inner surface.

In addition, the battery pack according to the present disclosure may also further include a control module accommodated in the internal space of the pack case and configured to control charge/discharge of the pouch-type battery cells.

In addition, a vehicle according to another aspect of the present disclosure may include a battery pack according to the present disclosure.

### Advantageous Effects

According to one aspect of the present disclosure, as a cell to pack (CTP) concept, a module case or the like is eliminated, so that cooling performance and energy density may be improved.

According to one aspect of the present disclosure, a plurality of pouch-type battery cells may be stably accommodated inside a pack case without the configuration of a stacking frame such as a plastic cartridge or a separate module case.

In particular, according to an embodiment of the present disclosure, it is possible to easily implement a configuration in which a plurality of pouch-type battery cells are stacked side by side in the horizontal direction in a vertically upright state.

According to one aspect of the present disclosure, the energy density of a battery pack may be improved. Moreover, according to an embodiment of the present disclosure, the battery cells are directly accommodated in the pack case without modularization, and thus a battery pack that does not require a module case for the battery module may be manufactured. Accordingly, by reducing the space occupied by the module case, more and more battery cells may be disposed inside the pack case. Therefore, there is an effect of further improving the energy density of the battery pack. Pouch-type battery cells may be directly assembled to the pack case of the battery pack, thereby maximizing space utilization of the battery pack and significantly improving energy capacity.

Moreover, according to one aspect of the present disclosure, a pouch-type battery cell having a flexible material case may be easily made into a solid form, so that a configuration in which the battery cells are directly stacked inside a pack case or a module case may be more easily implemented. Accordingly, the assemblability and mechanical stability of the battery pack or battery module may be improved.

In addition, according to one aspect of the present disclosure, the cooling efficiency of the battery pack may be further improved. In particular, in the case of an embodiment of the present disclosure, a part of each pouch-type battery cell is directly exposed to the pack case, so that heat from each pouch-type battery cell may be effectively discharged to the outside through the pack case.

Moreover, according to one aspect of the present disclosure, when thermal runaway occurs in a specific battery cell, it is possible to effectively respond to the thermal event. In particular, in the case of the present disclosure, when thermal runaway occurs in a specific battery cell, the propagation of thermal runaway may be effectively suppressed or delayed.

Moreover, according to an embodiment of the present disclosure, the top frame of the pack case is protected, and a sealing structure for each cell and bank is applied to prevent heat/flame propagation between cells.

In addition, according to one aspect of the present disclosure, internal short circuits or structural collapse may be prevented even when a thermal event occurs.

According to the present disclosure, a battery pack and a battery module with improved safety against thermal runaway, fire, explosion, and the like, that is, thermal safety, are provided. When heat is generated from some battery cells or battery modules in a battery module including a plurality of battery cells and a battery pack including a plurality of battery modules, the thermal propagation to surrounding battery cells or battery modules may be stably blocked.

In addition, according to one aspect of the present disclosure, the safety of the battery pack may be improved. In particular, according to an embodiment of the present disclosure, gas emitted from each battery cell may be smoothly discharged to the outside. Moreover, according to an embodiment of the present disclosure, the discharge direction of gas or flame emitted from a battery cell may be controlled. Therefore, thermal runaway propagation between adjacent battery cells may be effectively prevented.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a perspective view of a battery pack according to an embodiment of the present disclosure.
FIG. 2 is a view showing a pouch-type battery cell that may be included in the battery pack shown in FIG. 1.
FIG. 3 is a perspective view schematically showing a partial configuration of the battery pack shown in FIG. 1.
FIG. 4 is an enlarged view of part A of FIG. 3 in a state where some components of FIG. 3 are combined.
FIG. 5 is a perspective view showing separately a part of a partial configuration shown in FIG. 3.
FIG. 6 is a view schematically showing two pouch-type battery cells wrapped by one cell cover in the battery pack shown in FIG. 1.
FIG. 7 is an enlarged view of part B of FIG. 6.
FIG. 8 is a view schematically showing a cross-sectional configuration of the front end part in a state where some components of FIG. 3 are combined.
FIG. 9 is a view schematically showing the configuration of a battery module according to an embodiment of the present disclosure.
FIG. 10 is a schematic view of a vehicle according to an embodiment of the present disclosure.

### BEST MODE

Hereinafter, preferred embodiments of the present disclosure will be described in detail with reference to the accompanying drawings. The terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

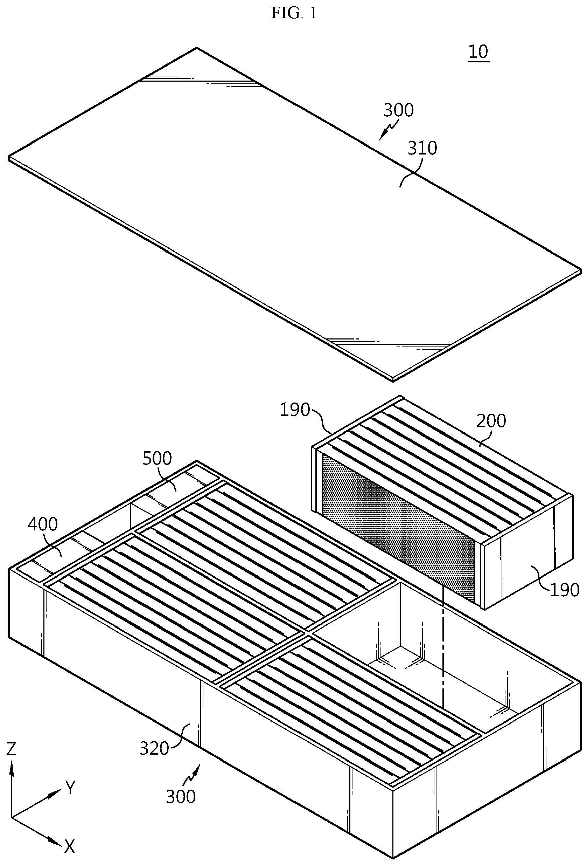

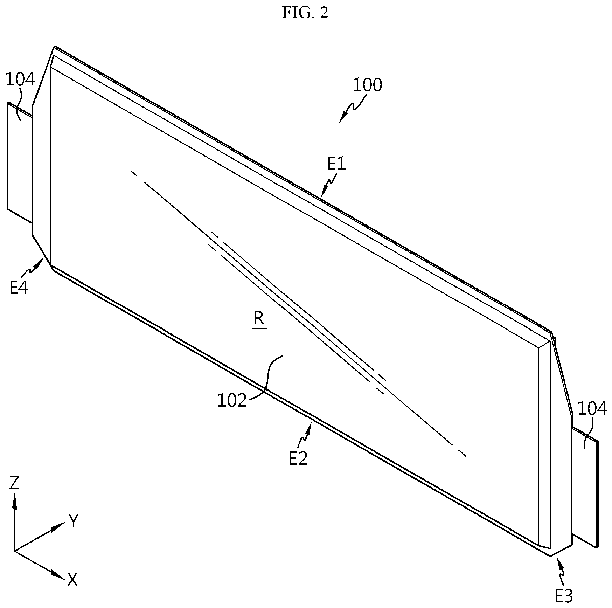

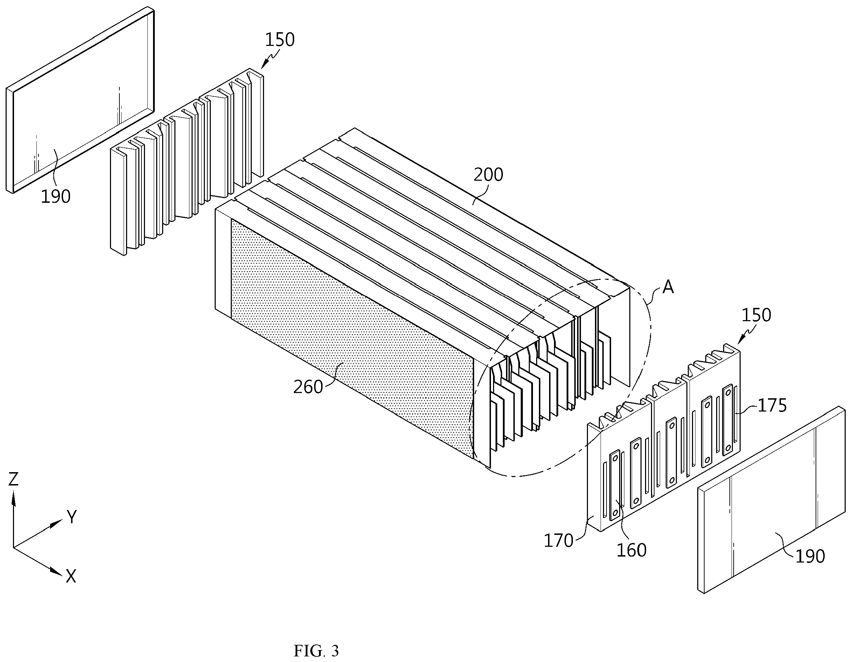

FIG. 1 is a perspective view of a battery pack according to an embodiment of the present disclosure. FIG. 2 is a view showing a pouch-type battery cell that may be included in the battery pack shown in FIG. 1. FIG. 3 is a perspective view schematically showing a partial configuration of the battery pack shown in FIG. 1.

Referring to FIGS. 1 to 3, the battery pack 10 according to the present disclosure includes a plurality of pouch-type battery cells 100, a busbar frame assembly 150, and a cell cover 200. The battery pack 10 may further include a pack case 300 for accommodating pouch-type battery cells 100 in an internal space.

A plurality of pouch-type battery cells 100 may be included in the battery pack 10. The cell cover 200 may be configured to surround the pouch-type battery cell 100 in the internal space of the pack case 300. And, these plurality of pouch-type battery cells 100 may be stacked in at least one direction. For example, referring to what is shown in FIG. 1, the plurality of pouch-type battery cells 100 may be stacked and disposed in the horizontal direction, such as the left-right direction (Y-axis direction in the drawing). In addition, the plurality of pouch-type battery cells 100 may be disposed in the front-rear direction (X-axis direction in the drawing) as shown in FIG. 1. For example, referring to what is shown in FIG. 1, the plurality of pouch-type battery cells 100 may be stacked in a form where twelve cells disposed in the left-right direction are provided in two rows in the front-rear direction. The capacity and scale of the battery pack 10 may be expanded by increasing the number of stacked pouch-type battery cells 100.

The pack case 300 may include a top frame 310 and a bottom frame 320. As a more specific example, the bottom frame 320 is configured in a box shape with an open top and may accommodate a plurality of pouch-type battery cells 100 in the internal space. And, the top frame 310 may be configured in the form of a cover covering the top opening of the bottom frame 320. In this case, the top frame 310 may be configured in the form of a box with an open bottom. In addition, the cell cover 200 together with a plurality of pouch-type battery cells 100 may be accommodated in the internal space of the pack case 300. The pack case 300 may be made of a plastic or metal material. In addition, the pack case 300 may employ various exterior materials of battery packs known at the time of filing the present disclosure.

In addition, the battery pack according to the present disclosure may further include a control module 400 accommodated in the internal space of the pack case 300. This control module 400 may include a battery management system (BMS). The control module 400 is mounted in the internal space of the pack case 300 and may be configured to generally control the charge/discharge operation or data transmission/reception operation of the pouch-type battery cell 100. The control module 400 may be provided in a pack unit rather than a module unit. More specifically, the control module 400 may be provided to control the charge/discharge state, power state, and performance state of the pouch-type battery cell 100 through pack voltage and pack current. The control module 400 estimates the state of the battery cells 100 within the battery pack 10 and manages the battery pack 10 using the estimated state information. For example, state information of the battery pack 10, such as state of charge (SOC), state of health (SOH), maximum input/output power allowance, and output voltage of the battery pack 10, is estimated and managed. And, using this state information, the charging or discharging of the battery pack 10 may be controlled, and furthermore, the replacement time of the battery pack 10 may also be estimated.

As shown in FIG. 1, the battery pack 10 according to the present disclosure may further include a battery disconnect unit (BDU) 500. The battery disconnect unit 500 may be configured to control the electrical connection of battery cells to manage the power capacity and function of the battery pack 10. To this end, the battery disconnect unit 500 may include a power relay, a current sensor, a fuse, and the like. The battery disconnect unit 500 is also provided in a pack unit rather than a module unit, and various disconnect units known at the time of filing the present disclosure may be employed.

In addition, the battery pack 10 according to the present disclosure may further include various components of battery packs known at the time of filing the present disclosure. For example, the battery pack 10 according to an embodiment of the present disclosure may further include a manual service disconnector (MSD) that allows an operator to shut off the power by manually disconnecting the service plug. In addition, it may also further include flexible busbars or cables for interconnecting a plurality of cell unit blocks.

The pouch-type battery cell 100, which corresponds to a basic unit of charge/ discharge, may be manufactured by accommodating an electrode assembly and an electrolyte inside a pouch exterior material 102 made of a laminated film containing a soft metal and then sealing the pouch exterior material 102, as shown in FIG. 2. In this case, the electrode assembly may be manufactured by interposing a separator between the negative electrode and the positive electrode. The pouch exterior material 102 may be an aluminum laminate sheet.

In addition, the pouch-type battery cell 100 may include an electrode lead 104 on at least one side. More specifically, the electrode lead 104 electrically connected to the electrode assembly may be provided to be exposed to the outside of the pouch exterior material 102. In the pouch-type battery cell 100 of this embodiment, the electrode lead 104 includes a positive electrode lead and a negative electrode lead as a pair. For example, the pouch-type battery cell 100 may have electrode leads 104 in the front and rear directions, respectively, as shown in FIG. 2. The distance between both ends of the pouch exterior material 102 where the electrode leads 104 protrude may be defined as the longitudinal direction (X-axis direction) of the pouch-type battery cell 100. **In** this way, the positive electrode lead and the negative electrode lead may be provided at both front and rear ends in the longitudinal direction of the pouch-type battery cell 100, that is, at the front and rear ends of the pouch-type battery cell 100.

The pouch-type battery cell 100 may include a receiving portion R in which the electrode assembly is accommodated and edge portions E1 to E4 around the receiving portion R. For example, the pouch-type battery cell 100 may have four edge portions, such as an upper edge portion E1, a lower edge portion E2, a front edge portion E3 and a rear edge portion E4, and all four edge portions E1 to E4 may be sealing portions using a foursided sealing method, or only the lower edge portion E2 may be a folded portion of the pouch exterior material and an unsealed portion using a three-sided sealing method. For example, the upper edge portion E1 may be a so-called double side folding (DSF) portion that is folded twice as a sealing portion of the pouch-type battery cell 100, and the lower edge portion E2 may be an unsealed portion. When configuring a battery module or battery pack using a pouch-type battery cell, by minimizing the battery module size, the space occupied by the pouch-type battery cell within the device may be reduced to increase space utilization, or by minimizing the area occupied by the sealing portion for a given battery module size, the resulting surplus portion may be used to increase the size of the electrode assembly to increase the capacity of the secondary battery. For the latter, in most cases, dimension is controlled by folding the sealing portion located on the side of the pouch-type battery cell to form a folding portion. However, if the sealing portion is simply folded, it may unfold due to the springback cell swelling phenomenon of the folding portion itself, and thus the folding portion is taped to prevent this. In addition, among the sealing portions, when the sealing portion located in a direction where the electrode lead 104 is withdrawn is referred to as a cell terrace, the cell terrace of the pouch-type battery cell 100 in this embodiment is formed at the front edge portion E3 and the rear edge portion E4.

As such, each pouch-type battery cell 100 has two wide surfaces corresponding to the receiving portion R, and the edge portion of these wide surfaces may have a sealing portion or a folded portion of the pouch exterior material. Therefore, considering the shape of the pouch-type battery cells 100, it is difficult to stack them in an upright state in the vertical direction (Z-axis direction in the drawing) with the narrow surface, such as the edge portion E1 or E2, facing down. However, according to the present disclosure, since the cell cover 200 is included, the upright state of the pouch-type battery cell 100, that is, the standing state is supported, so that it is easy to stack the plurality of pouch-type battery cells 100 in the left-right direction and/or in the front-rear direction.

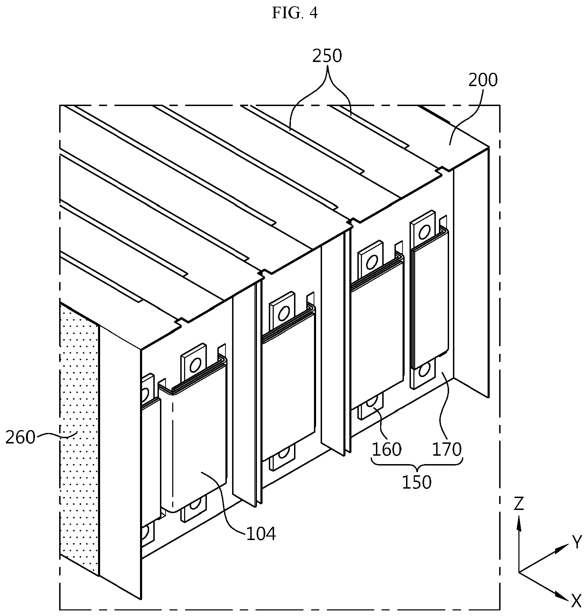

Meanwhile, FIG. 4 is an enlarged view of part A of FIG. 3 in a state where some components of FIG. 3 are combined.

Referring to FIGS. 3 and 4, the busbar frame assembly 150 is configured to be coupled to at least some of the electrode leads 104 of the plurality of pouch-type battery cells 100. The busbar frame assembly 150 may be provided on the side where the electrode lead 104 is formed. As described with reference to FIG. 2, the electrode leads 104 are withdrawn in both directions from the pouch-type battery cell 100, so the busbar frame assembly 150 may be coupled to both sides of the pouch-type battery cell 100 in the longitudinal direction, respectively.

For example, the busbar frame assembly 150 may include a busbar electrode 160 made of an electrically conductive material and a busbar frame 170 made of an electrically insulating material to support the busbar electrode 160. The busbar frame 170 may be configured to prevent a short circuit of the busbar electrode 160. To this end, the busbar frame 170 may be made of a polymer synthetic resin having insulating properties. In the busbar frame 170, a lead withdrawal hole 175 is formed to allow the electrode lead 104 to pass through and be welded to the busbar electrode 160.

The busbar frame assembly 150 may electrically connect the electrode leads 104 to allow the plurality of pouch-type battery cells 100 to be electrically connected in series and/or in parallel. In addition, the busbar frame assembly 150 may be configured to be connected to the control module 400 so that sensing information such as voltage is transmitted.

In addition, the battery pack 10 may further include an insulating cover 190. The insulating cover 190 may be configured to prevent a short circuit of the electrode lead 104 or the busbar electrode 160. To this end, the insulating cover 190 may be made of a polymer synthetic resin having insulating properties. Moreover, since the electrode leads 104 are provided on both sides of the pouch-type battery cell 100, the insulating cover 190 may also be included on both sides where the electrode leads 104 are provided. It is, of course, possible to allow the busbar frame assembly 150 itself to perform that function without separately including the insulating cover 190.

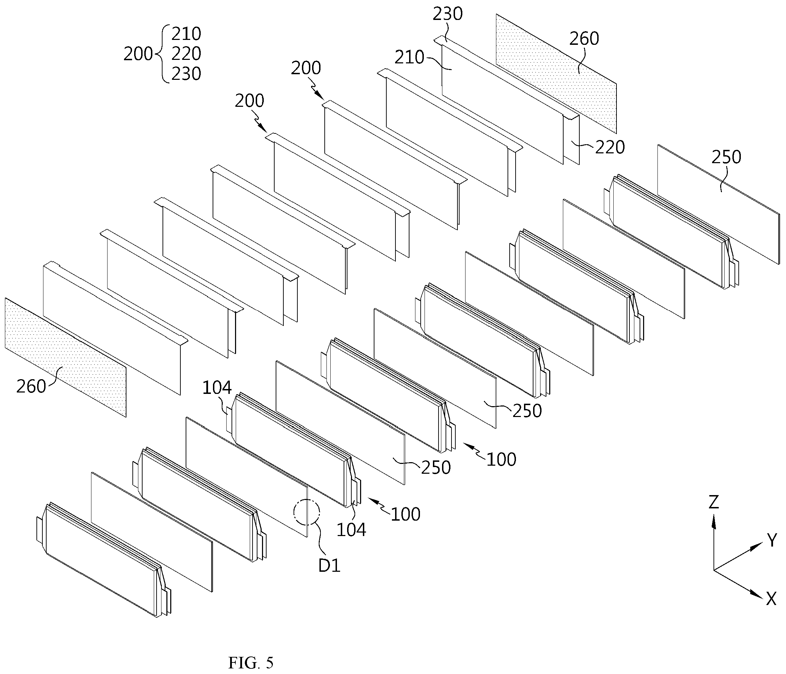

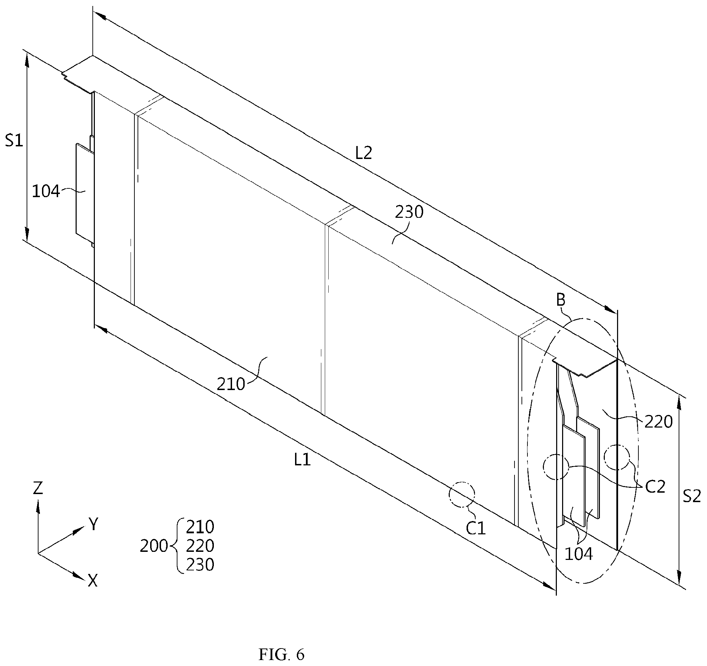

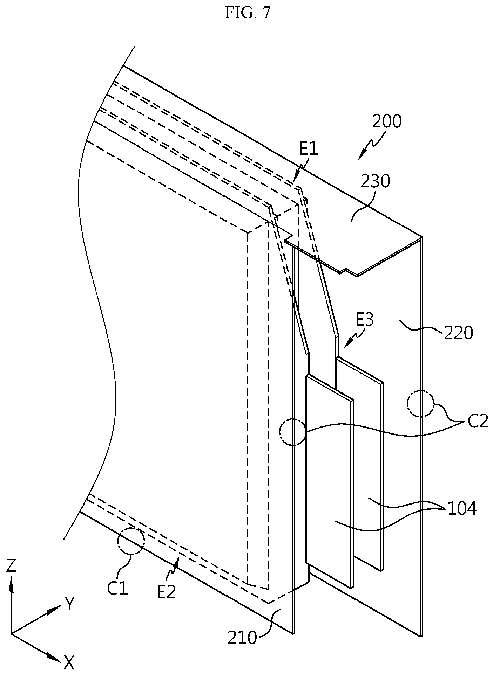

FIG. 5 is a perspective view showing separately a part of a partial configuration shown in FIG. 3. FIG. 6 is a view schematically showing two pouch-type battery cells wrapped by one cell cover in the battery pack shown in FIG. 1, and FIG. 7 is an enlarged view of part B of FIG. 6.

Referring to FIGS. 5 to 7, the cell cover 200 may be provided to at least partially surround at least some of the pouch-type battery cells 100 among the plurality of pouch-type battery cells 100. In addition, the cell cover 200 is included in plurality in one battery pack 10.

The cell cover 200 may be configured to group and unitize a plurality of pouch-type battery cells 100 included in the battery pack 10. In this case, one cell cover 200 can be said to constitute one cell unit. And, the one cell unit may include one or more pouch-type battery cells 100.

For example, the cell cover 200 may be configured to at least partially surround two pouch-type battery cells 100. Each cell group surrounded by the cell cover 200 may also be referred to as a cell bank unit in addition to a cell unit. The pouch-type battery cell 100 in the cell unit or cell bank may include an electrical connection configuration in series and/or in parallel through the busbar electrode 160 or the like.

The cell cover 200 may be at least partially adhered to the outer surface of the pouch-type battery cell 100. For example, an inner surface of the cell cover 200 may be adhered to the receiving portion R of the pouch-type battery cell 100. The member for adhesion may be thermally conductive. Through this adhesion, the cell cover 200 is firmly coupled to the pouch-type battery cell 100 and may help discharge heat generated in the pouch-type battery cell 100 to the outside of the pouch-type battery cell 100.

The cell cover 200 may be configured to support a plurality of pouch-type battery cells 100 in an upright state. In the battery pack 10 according to the present disclosure, the cell cover 200 may be configured to support the upright state of the wrapped pouch-type battery cells 100, that is, the standing state while surrounding one or more pouch-type battery cells 100. In particular, the cell cover 200 may be configured such that a plurality of pouch-type battery cells 100 may be stacked in the horizontal direction while standing in the vertical direction. For example, as in the embodiment shown in FIGS. 1 to 7, a plurality of cell covers 200 are stacked on each other in the horizontal direction, and each cell cover 200 may be configured to surround one or more pouch-type battery cells 100. In this case, the configuration in which the plurality of pouch-type battery cells 100 are stacked side by side in the horizontal direction in a respectively upright state may be stably maintained by the cell cover 200.

In particular, the cell cover 200 may be configured to be self-supporting in the internal space of the pack case 300. That is, the cell cover 200 may be configured to remain upright on its own without the help of other components provided in the battery pack 10, such as the pack case 300, the pouch-type battery cell 100, or the like.

The cell cover 200 may be configured to partially surround the pouch-type battery cell 100 so that at least one side of the wrapped pouch-type battery cell 100 is exposed to the outside. That is, the cell cover 200 may be configured to cover only a part of the pouch-type battery cell 100 without fully surrounding the entire pouch-type battery cell 100. In particular, the cell cover 200 may be configured so that at least one side of the pouch-type battery cell 100 is exposed toward the pack case 300. In this respect, the cell cover 200 may also be referred to by a term such as a cell sleeve.

For example, referring to the embodiment of FIGS. 1 to 7, the cell cover 200 is configured to surround two pouch-type battery cells 100, but the wrapped pouch-type battery cell 100, that is, the lower portion of the battery cell 100 accommodated in the internal space may not be surrounded by the cell cover 200. Therefore, the lower portion of the battery cell 100 may be exposed toward the pack case 300 and may directly face the pack case 300. In particular, referring to FIG. 1, the lower portion of the battery cell 100 may be exposed toward a bottom surface of the bottom frame 320.

A battery cell in which all four edge portions E1 to E4 are sealed may be referred to as a four-side sealing cell, and a battery cell in which three edge portions E1, E3, E4 are sealed may be referred to as a three-side sealing cell. In this configuration, the cell cover 200 may be configured to surround both sides of the receiving portion R and a part of the edge portions E1 to E4 of the pouch-type battery cell 100, which may be a 4-side sealing cell or a 3-side sealing cell. For example, the cell cover 200 may be configured in a ' 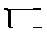 ' shape, 'U' shape, or 'n' shape that surrounds three sides of the pouch-type battery cell 100.

For example, when one cell cover 200 is configured to surround one pouch-type battery cell 100, the cell cover 200 may be configured to surround both surfaces of the receiving portion R of the same pouch-type battery cell 100 (e.g., the left surface and right surface of the same receiving portion R) and a part of the edge portion of the corresponding battery cell 100 from the outside. In another example, when one cell cover 200 is configured to surround a plurality of pouch-type battery cells 100, for example, a plurality of pouch-type battery cells 100 disposed in the left-right direction, it may be configured to surround the outer surface of the receiving portion R of the outermost pouch-type battery cell 100 and one side edge portions of the entire pouch-type battery cell 100. As a more specific example, as shown in FIGS. 6 and 7, one cell cover 200 may be configured to surround two pouch-type battery cells 100 stacked in the left-right direction. In this case, the cell cover 200 may be configured to surround the left surface of the left pouch-type battery cell 100, the upper edge portions E1 of the two pouch-type battery cells 100, and the right surface of the right pouch-type battery cell 100.

According to this embodiment, the configuration of supporting and protecting one or more pouch-type battery cells 100 by one cell cover 200 may be easily implemented. In addition, according to the above embodiment, the process of handling one or more pouch-type battery cells 100 through the cell cover 200 may be performed easily and safely. In addition, according to the above embodiment, one cell cover 200 may face the surface of the two receiving portions R with respect to the pouch-type battery cell 100 accommodated therein. Therefore, cooling performance between the receiving portion R and the cell cover 200 may be further improved. In particular, in this case, surface cooling is implemented through a wide surface of the receiving portion R, and thus cooling efficiency may be improved.

In particular, the cell cover 200 may be configured to surround an edge portion that is not provided with the electrode lead 104 among several edge portions of the pouch-type battery cell 100 accommodated therein. For example, as described with reference to FIG. 2, the pouch-type battery cell 100 may have two electrode leads 104, that is, a positive electrode lead and a negative electrode lead. In this case, the two electrode leads 104 may be located at the front edge portion E3 and the rear edge portion E4, respectively. In this case, the cell cover 200 may be configured to surround one of the two remaining edge portions E1, E2 except for the front edge portion E3 and the rear edge portion E4. In this way, the cell cover 200 may cover both sides and the top of the pouch-type battery cell 100, while having a structure that is open at the front, rear, and bottom sides of the pouch-type battery cell 100.

In particular, according to the above embodiment, the lower edge portion E2 is located adjacent to the open end of the cell cover 200, so that it faces the pack case 300 without being surrounded by the cell cover 200 and may be in direct contact with the pack case 300. Therefore, heat from the pouch-type battery cell 100 wrapped by the cell cover 200 may be quickly and smoothly discharged toward the pack case 300 below. Thus, the cooling performance of the battery pack 10 may be secured more effectively.

In particular, this configuration may be implemented more effectively when cooling is mainly performed in the lower portion of the pack case 300. For example, in the case of a battery pack mounted on an electric vehicle, since it is mounted on the lower portion of the vehicle body, cooling may be mainly performed in the lower portion of the pack case 300. In this case, as in the above embodiment, when the lower edge portion E2 of each pouch-type battery cell 100 is in face-to-face contact with the pack case 300, heat may be quickly transferred from each battery cell 100 to the pack case 300, thereby further improving cooling performance.

In addition, according to the above embodiment, when high-temperature gas or flame is discharged from the pouch-type battery cell 100 in a situation such as thermal runaway, the discharged gas or flame may be effectively prevented from heading toward the upper side. In particular, when a passenger is located on the upper side of the battery pack 10, such as in an electric vehicle, it is possible to suppress or delay gas or flame from heading toward the passenger according to the above embodiment.

In addition, the cell cover 200 surrounds three sides of the pouch-type battery cell 100, and thus a configuration in which the busbar electrode 160 and the electrode lead 104 are located on the side that is not surrounded by each cell cover 200 may be easily implemented.

Furthermore, according to this embodiment of the present disclosure, it is possible to induce the discharge direction of high-temperature gas or flame to the exposed side of the cell cover 200 (a part where the electrode lead 104 is formed). For example, according to the above embodiment, since the front and rear sides of the cell cover 200 where the electrode lead 104 is located are open, gas or flame may be discharged in this open direction. In particular, when the cell cover 200 is configured in a form where the front and rear sides are open as described above, side directional venting may be easily implemented along the longitudinal direction of the pouch-type battery cell 100.

While the pouch-type battery cell 100 has the advantage of being able to implement a secondary battery of the same capacity with a smaller volume and mass on account of its being lightweight, less prone to electrolyte leakage, and flexible in shape, it has a task of ensuring safety due to a risk of explosion in case of overheating, which is one of the important tasks. Overheating of the pouch-type battery cell 100 occurs due to various reasons, one of which may be a case where an overcharge exceeding the limit flows through the pouch-type battery cell 100. When an overcharge is applied, the pouch-type battery cell 100 generates heat by Joule heat, and thus the internal temperature of the battery cell 100 rapidly increases. A rapid rise in temperature may cause a decomposition reaction of the electrolyte to generate gas. This resulting increase in pressure inside the pouch exterior material may cause a swelling phenomenon, a type of bulging phenomenon, which may lead to serious problems such as explosion of the secondary battery. When gas is generated inside the pouch-type battery cell 100 due to exposure to high temperature, external impact, and the like, as well as such overcharge, it is necessary to effectively discharge the gas to ensure the safety of the secondary battery. Discharging gas generated inside the secondary battery to the outside is called venting. The cell cover 200 included in the battery pack 10 according to an embodiment of the present disclosure may be configured to allow venting gas to be discharged, thereby ensuring the safety of the secondary battery.

If the pouch-type battery cell 100 is a three-sided sealing battery cell, the upper edge portion E1, which is a sealing portion of the pouch-type battery cell 100, may be more relatively vulnerable to the discharge of high-temperature gas or flame than the lower edge portion E2, which is an unsealed portion. However, according to the above embodiment, the upper edge portion E1, which is a sealing portion, may be disposed to face the cell cover 200, thereby being more advantageous for directional venting.

According to an embodiment of the present disclosure described hereinabove, gas or the like emitted from each pouch-type battery cell 100 may be smoothly discharged to the outside. Moreover, according to an embodiment of the present disclosure, the discharge direction of the gas or flame emitted from the pouch-type battery cell 100 may be controlled. Therefore, the propagation of thermal runaway between adjacent pouch-type battery cells 100 may be effectively prevented.

In the present disclosure, the pouch-type battery cell 100 and the cell cover 200 may be directly seated on the pack case 300. Moreover, the lower ends of the pouch-type battery cell 100 and the cell cover 200 may be seated on the upper surface of the bottom of the pack case 300. For example, the cell cover 200 may be directly seated on the bottom surface of the bottom frame 320 in the embodiment of FIG. 1. At this time, a part of the cell cover 200, such as a lower end portion of the cell cover 200 indicated by 'C1' in FIGS. 6 and 7, may be seated in direct contact with the bottom surface of the bottom frame 320. And, when the lower end portion of the cell cover 200 is seated in this way, the cell cover 200 may be configured to remain stably seated. In this case, if the cell cover 200 is made of a metal material with excellent rigidity such as steel, especially stainless steel (SUS), the self-supporting state may be maintained more stably. Therefore, in this case, the standing state of the pouch-type battery cell 100 may be more reliably supported.

According to this aspect of the present disclosure, a plurality of pouch-type battery cells 100 may be directly seated and accommodated inside the pack case 300 without a module case. In particular, in the case of the pouch-type battery cells 100, the exterior material is made of a soft material, so it can be said that it is vulnerable to external impact and has low hardness. Therefore, it is not easy to accommodate the pouch-type battery cell 100 itself inside the pack case 300 without accommodating it in the module case. However, in the case of the present disclosure, the plurality of pouch-type battery cells 100 are coupled to the cell cover 200 in a state where at least a part is surrounded by the cell cover 200 and then are directly accommodated inside the pack case 300, and their stacking state may be maintained stably.

Moreover, in the case of the present disclosure, a CTP-type battery pack using the pouch-type battery cell 100 may be implemented more efficiently. That is, in the case of the present disclosure, the battery pack 10 may be provided in a form of directly accommodating the pouch-type battery cell 100 inside the pack case 300, rather than accommodating the pouch-type battery cell 100 inside a separate module case and accommodating this module case inside the pack case 300. In this case, at least one side of the pouch-type battery cell 100 may be exposed to the outside of the cell cover 200 and may be disposed to directly face the pack case 300.

Therefore, according to this aspect of the present disclosure, the battery pack 10 does not need to be further provided with a module case, a stacking frame, or fastening members such as bolts for maintaining the stacked state of the cells. Accordingly, the space occupied by other components such as a module case or a stacking frame, or the space for securing tolerances thereof may be eliminated. Therefore, since the battery cells may occupy more space as much as the removed space, the energy density of the battery pack 10 may be further improved.

In addition, according to this aspect of the present disclosure, since a module case, a stacking frame, a bolt, or the like are not provided, the volume and weight of the battery pack may be reduced, and the manufacturing process may be simplified.

According to the present disclosure, the assemblability of the battery pack may be improved. In particular, according to an embodiment of the present disclosure, the process of preparing a battery module by accommodating pouch-type battery cells in a module case, and the process of accommodating one or more battery modules prepared in this away in a pack case may not be performed. Thus, the manufacturing process may be simplified, and manufacturing time may be reduced.

**In** addition, according to this aspect of the present disclosure, handling of the pouch-type battery cell 100 may become easier. For example, when accommodating a plurality of pouch-type battery cells 100 inside a pack case, the pouch-type battery cells 100 may be held by a jig or the like. At this time, the jig may hold the cell cover 200 surrounding the pouch-type battery cell 100, rather than directly holding the pouch-type battery cell 100. Accordingly, damage to or breakage of the pouch-type battery cell 100 caused by the jig may be prevented.

In addition, according to this aspect of the present disclosure, the cell cover 200 is coupled to the pouch-type battery cell 100, so that the pouch-type battery cell 100 may be effectively protected without a module case.

In addition, according to this embodiment of the present disclosure, the cooling performance of the battery pack 10 may be secured more effectively. In particular, according to the above embodiment, the pouch-type battery cell 100 and the pack case 300 may be in direct contact with each other through the open end of the cell cover 200. That is, one side of the pouch-type battery cell 100 disposed adjacent to the open end of the cell cover 200 may directly face or contact the pack case 300. Therefore, the heat emitted from each pouch-type battery cell 100 is directly transferred to the pack case 300, so that cooling performance may be improved. In addition, in this case, since a separate cooling structure may not be required between the pouch-type battery cell 100 and the pack case 300, efficient cooling performance may be implemented. And, in this case, there may be no space for a cooling medium such as air to flow in between the pouch-type battery cells 100.

In addition, in this case, at least one side of the cell cover 200 is open, which may be advantageous in reducing the weight of the battery pack 10. For example, when the cell cover 200 is made of a material such as steel, if the lower end of the cell cover 200 is formed in an open shape, the weight of the cell cover 200 may be reduced by as much as the lower plate. Moreover, as shown in FIG. 1, the battery pack 10 may include many cell covers 200, and if all the cell covers 200 do not have a lower plate and are formed in an open shape, the weight of the battery pack 10 may be significantly reduced.

In addition, according to one aspect of the present disclosure, the configuration of a long cell having a long length in a specific direction may be prepared more easily.

For example, in the case of a conventional prismatic cell, when the length in a specific direction is formed to be long, the process of inserting the electrode assembly into a prismatic case may not be easy. In particular, there may be a problem such as damage to the electrode assembly during the insertion process of the electrode assembly. However, according to an embodiment of the present disclosure, unidirectional lengthening of the pouch-type battery cell 100 and the cell cover 200 may be easily implemented during the steps of molding the pouch exterior material, manufacturing the electrode assembly, or manufacturing the cell cover 200. And, the process of inserting the long cell manufactured to be lengthened in one direction in this way through an open side (e.g., bottom) of the cell cover 200 may be easily performed. Therefore, according to this aspect of the present disclosure, even when manufacturing the battery pack 10 using long cells, it is possible to secure excellent assemblability, processability, productivity, and the like.

The cell cover 200 is included in plurality in the battery pack 10. When a plurality of cell covers 200 are included, the plurality of cell covers 200 may be adhered and fixed in close contact with each other. For example, an adhesive member may be interposed in a part where the two cell covers 200 face each other to adhesively fix them. Through this adhesive configuration, the connection configuration between multiple cell covers 200 may be made more robust. For example, a plurality of cell covers 200 may be arranged side by side, and neighboring cell covers 200 may be adhered and fixed to each other. The adhesive member may be insulating. Such an adhesive member may achieve insulation between the cell covers 200, which may be made of a metal material.

In another example, the plurality of cell covers 200 may be spaced apart from each other. For example, a plurality of cell covers 200 are arranged side by side, and a space may exist between neighboring cell covers 200. For example, the plurality of cell covers 200 may be arranged side by side in the Y-axis direction, and the cell covers 200 may be spaced apart in the Y-axis direction. Direct heat transfer between the cell covers 200 may be blocked through the spaced apart space. In addition, separate members required to configure the battery pack 10 may be inserted through the spaced apart space.

The battery pack 10 according to the present disclosure further includes a thermal barrier 250, as shown in FIGS. 4 and 5. The thermal barrier 250 may be configured in the form of a pad made of an insulating material and is interposed between adjacent cell covers 200. Preferably, the thermal barrier 250 is made of a compressible material and may be interposed between adjacent cell covers 200. Alternatively, the thermal barrier 250 may be interposed between the pouch-type battery cells 100 within one cell cover 200. For example, the thermal barrier 250 may include an elastic material such as a sponge.

The thermal barrier 250 may be interposed in at least a part between the plurality of cell covers 200 in the form of an insulating pad or flame suppression pad. Such an insulating pad or flame suppression pad may prevent heat or flame that may be generated within any one cell cover 200 from being transferred to other cell covers 200 and affecting other pouch-type battery cells 100. The flame suppression pad may be made of a heat-resistant resin such as vinyl chloride resin, a material such as silicon or ceramic, or a composite of a heat-resistant resin and a ceramic or glass filler. The thermal barrier 250 may also be formed of a metal plate coated with insulation. However, the examples given here are only illustrative and any flame retardant material is sufficient. It is desirable that the thermal barrier 250 is made of a material that does not decompose, melt, or ignite at least up to the temperature at which thermal runaway of the pouch-type battery cell 100 is generated (e.g., 150°C to 200°C).

Preferably, the thermal barrier 250 may be configured to be in close contact with the cell cover 200 between adjacent cell covers 200. Accordingly, the thermal barrier 250 may be configured to suppress the swelling phenomenon that may occur in the pouch-type battery cell 100. The size of the surface of the thermal barrier 250 facing the cell cover 200 may be a size corresponding to the side of the cell cover 200. Accordingly, it is possible to delay the spread of flame due to thermal runaway of the pouch-type battery cell 100 and at the same time suppress the swelling phenomenon that may occur in the pouch-type battery cell 100, so that structural stability of the battery pack 10 may be further secured.

The cell cover 200 may be made of various materials to secure rigidity. In particular, the cell cover 200 may be made of a metal material. In the case of this metal material, the stacked state of the pouch-type battery cells 100 may be more stably maintained, and the pouch-type battery cells 100 may be more safely protected from external impact. In particular, the cell cover 200 may include a steel material, more particularly a SUS material. For example, the cell cover 200 may be entirely made of SUS material.

As such, when the cell cover 200 is made of a steel material, it has excellent mechanical strength and rigidity, and thus may more stably support the stacked state of the pouch-type battery cells 100. In addition, in this case, it is possible to more effectively prevent damage to or breakage of the pouch-type battery cell 100 from external impacts, such as needle bodies. In addition, in this case, handling of the pouch-type battery cell 100 may become easier.

In addition, as in the above embodiment, when the cell cover 200 is made of a steel material, the overall structure may be stably maintained due to its high melting point in the event of occurrence of a flame from the pouch-type battery cell 100. In particular, since the steel material has a higher melting point than aluminum material, it may not be melted even with flame ejected from the pouch-type battery cell 100 and its shape may remain stable. Therefore, the effect of preventing or delaying flame propagation between the pouch-type battery cells 100, venting control effect, and the like may be secured excellently.

Meanwhile, in the battery pack 10 according to the present disclosure, a thermal interface material (TIM) may be interposed to increase heat transfer performance between different components. For example, TIM may be filled between the pouch-type battery cell 100 and the cell cover 200, between the cell cover 200 and the pack case 300, and/or between the pouch-type battery cell 100 and the pack case 300. In this case, the cooling performance of the battery pack 10 may be further improved. The TIM is intended to reduce contact thermal resistance between members. In the battery pack where cooling is important, it is necessary to improve the thermal performance of the entire system by using a material capable of minimizing contact thermal resistance as described above. The TIM may be diverse, such as a thermally conductive grease, a thermal sheet, a thermal pad, a thermally conductive adhesive, and a phase change material (PCM). For a specific example, the TIM may be any one of a thermally conductive silicone-based bond, a thermally conductive silicone pad, and a thermally conductive acrylic bond. Heat-dissipating silicone-based adhesives and heat-dissipating acrylic adhesives are commercially available in one or two liquid types and may be applied between different components by means of coating or injection. The heat-dissipating silicone pad includes a base film such as double-sided tape and release paper on the top and bottom of it, which may be applied between different components by an adhesive method after removing the release paper. Since heat-dissipating silicone-based adhesives, heat-dissipating silicone pads, and heat-dissipating acrylic adhesives have higher thermal conductivity compared to general adhesives, the amount and speed of heat transfer between different components may be further increased. Therefore, according to this embodiment of the present disclosure, the heat dissipation performance of the pouch-type battery cell 100 may be further enhanced, so that the cooling performance of the battery pack 10 may be further improved.

In addition, the battery pack 10 according to the present disclosure may further include an insulating pad 260, as shown in FIGS. 3 to 5. The insulating pad 260 is made of a material having electrical insulating properties and may be in contact with the surface of at least one cell cover 200. For example, as shown in FIG. 5, the insulating pad 260 may be located at both ends in the stacking direction of a cell assembly including a plurality of pouch-type battery cells 100 and a plurality of cell covers 200 stacked in the left-right direction. In particular, the insulating pad 260 may be configured to be inserted into the busbar frame assembly 150 together with the cell cover 200. The insulating pad 260 may be made of the same material as GFRP.

The cell cover 200 may further include an insulating member (not shown). The insulating member may be made of an electrically insulating material and may be provided on the inner surface of the cell cover 200 where the pouch-type battery cell 100 is accommodated. In particular, the insulating member may have an adhesive layer on at least one side, which may be adhered to the inner surface of the cell cover 200. In addition, the insulating member may have adhesive layers on both sides, which may be adhered not only to the inner surface of the cell cover 200 but also to the pouch-type battery cell 100. In addition, the insulating member may be made of a heat-resistant material. For example, the insulating member may be configured in the form of a heat-resistant tape in which an adhesive is applied to the surface of a ceramic sheet having heat resistance. The insulating member may also be a film made of a polyimide (PI) material. In addition, the insulating member may also be located on the inner surface and the outer surface of the cell cover 200, that is, on both sides.

Meanwhile, referring to the cell cover 200 in more detail with reference to FIGS. 5 to 7, the cell cover 200 is provided to cover both sides of the receiving portion R and the upper edge portion E1 of the wrapped pouch-type battery cell 100. The cell cover 200 may include a first side cover portion 210 covering one side of the wrapped pouch-type battery cell 100, a second side cover portion 220 covering the other side of the wrapped pouch-type battery cell 100, and an upper cover portion 230 connecting the first side cover portion 210 and the second side cover portion 220 and covering the upper end part of the wrapped pouch-type battery cell 100.

For example, the first side cover portion 210 may cover the outer surface of the receiving portion R of the pouch-type battery cell 100 placed on the leftmost side among the pouch-type battery cells 100 surrounded by the cell cover 200. The second side cover portion 220 may cover the outer surface of the receiving portion R of the pouch-type battery cell 100 placed on the rightmost side among the pouch-type battery cells 100 surrounded by the cell cover 200.

The upper cover portion 230 may be configured to surround the top of the upper edge portion E1 of the pouch-type battery cell 100 accommodated therein. The upper cover portion 230 may be configured in a planar shape. **In** this case, the upper cover portion 230 has a cross-section formed in a straight shape in the horizontal direction, so that the upper edge portion E1 of the pouch-type battery cell 100 may be wrapped in a straight shape from the outside.

A configuration of changing the number of pouch-type battery cells 100 surrounded by the cell cover 200 may be easily implemented. In particular, according to an embodiment of the present disclosure, by changing the width of the cell cover 200 (width along the Y-axis direction of the upper cover portion 230), the number of unit cells accommodated by the cell cover 200 may be easily changed. Therefore, in this case, changes in capacity or output by one cell cover 200 may be easily made.

The first side cover portion 210 may be configured to extend downward from one end of the upper cover portion 230. For example, the first side cover portion 210 may be configured to extend long downward from the left end of the upper cover portion 230. The first side cover portion 210 may be configured to surround a wide surface of the pouch-type battery cell 100 accommodated therein. Moreover, the first side cover portion 210 may be formed in a planar shape. In this case, the first side cover portion 210 may be configured in a bent form at the upper cover portion 230.

The second side cover portion 220 may be positioned to be spaced apart horizontally from the first side cover portion 210. And, the second side cover portion 220 may be configured to extend downward from the other end of the upper cover portion 230. For example, the second side cover portion 220 may be configured to extend long downward from the right end of the upper cover portion 230. And, the second side cover portion 220 may be configured to surround a wide surface of the pouch-type battery cell 100 accommodated therein. Moreover, the second side cover portion 220 may also be formed in a planar shape like the first side cover portion 210. In this case, the second side cover portion 220 may also be configured in a bent form at the upper cover portion 230.

In the above embodiment, the internal space may be limited by the first side cover portion 210, the second side cover portion 220, and the upper cover portion 230. And, the cell cover 200 may accommodate one or more pouch-type battery cells 100 in this limited internal space.

In this case, the cross-sectional configuration of the cell cover 200, as viewed from the front side, can be said to be roughly similar to an 'n' shape. Therefore, in this case, the cell cover 200 may be referred to as 'n-fin'. Moreover, each cell bank may be covered with a cell cover 200.

Meanwhile, in the drawings attached to this specification, the cell cover 200 is illustrated centering on a configuration formed in an 'n' shape, but the cell cover 200 may also be formed in a 'U' shape. In this case, the cell cover 200 may be provided to cover both sides of the receiving portion R and the lower edge portion E2 of the pouch-type battery cell 100.

Preferably, the cell cover 200 may be integrally formed. In this case, the cell cover 200 may be configured by bending a metal plate with a plate structure. That is, the cell cover 200 may be formed in a shape where one plate is bent. The cell cover 200 may be configured to surround one or more pouch-type battery cells 100 by bending both ends of one plate in the same direction. In particular, when a first side cover portion 210, a second side cover portion 220, and an upper cover portion 230 are provided in one cell cover 200, the first side cover portion 210, the second side cover portion 220, and the upper cover portion 230 may be formed of one plate. In this case, it can be said that several components of the cell cover 200 are integrally manufactured. Here, each component may be distinguished by a bent portion. In particular, two bent portions may be formed in one plate. And, based on these two bent portions, the first side cover portion 210, the second side cover portion 220, and the upper cover portion 230 may be distinguished. In particular, the central portion of one plate forms the upper cover portion 230, and both sides are bent or folded downward by about 90 degrees around such upper cover portion 230, thereby forming the first side cover portion 210 and the second side cover portion 220. In this way, the configuration of forming a bent portion in one plate to form the cell cover 200 may be implemented in various ways, such as pressing or roll forming.

According to this embodiment of the present disclosure, manufacturing of the cell cover 200 may be simplified. In addition, the cell cover 200 with a simplified structure is made of a metal material having higher rigidity than the case of the pouch-type battery cell 100, such as the pouch exterior material, so that the pouch-type battery cell 100 surrounded by the cell cover 200 may be protected from external impact or vibration. In addition, in this case, heat conduction performance through the cell cover 200 is further enhanced, which may further improve cooling performance.

The cell cover 200 may include an insulating coating layer on its inner surface. The insulating coating layer may be coated, applied, or attached with any one of silicone resin, polyamide, and rubber. According to the configuration of the insulating coating layer of the cell cover 200 according to this embodiment, the insulating coating effect may be maximized with a minimum amount of coating. In addition, since an insulating coating layer is applied to the inner surface of the cell cover 200, insulation between the pouch-type battery cell 100 and the cell cover 200 may be strengthened.

The first side cover portion 210 and the second side cover portion 220 may be configured to have the same size. In addition, the first side cover portion 210 and the second side cover portion 220 may be configured to have different sizes.

For example, when a plurality of cell covers 200 are included, the first side cover portion 210 and the second side cover portion 220 may have the same size in some cell covers 200. In some other cell covers 200, the sizes of the first side cover portion 210 and the second side cover portion 220 may be different from each other.

For example, the cell cover 200 may include a first side cover portion 210 located on the left and a second side cover portion 220 located on the right, based on the pouch-type battery cell 100 accommodated therein. In this case, the first side cover portion 210 may be formed to be smaller in size than the second side cover portion 220. In particular, the second side cover portion 220 may be formed to extend protruding further toward the side where the busbar frame assembly 150 is located than the first side cover portion 110. For example, as shown in FIG. 6, the length L2 of the second side cover portion 220 in the front-rear direction may be greater than the length L1 of the first side cover portion 210 in the front-rear direction.

In addition, as shown in FIG. 6, the vertical length S1 of the first side cover portion 210 and the vertical length S2 of the second side cover portion 220 may be the same or different. When the vertical length S1 of the first side cover portion 210 and the vertical length S2 of the second side cover portion 220 are the same, a self-supporting configuration of the cell cover 200 may be more easily achieved.

When the vertical length S1 of the first side cover portion 210 and the vertical length S2 of the second side cover portion 220 are different, the longer side cover portion may be inserted into the pack case 300, which allows the cell cover 200 to be firmly fixed. In order to fit and fix the longer side cover portion, the pack case 300 may have a fastening groove. According to this embodiment of the present disclosure, the coupling force between the cell cover 200 and the pack case 300 may be improved. Therefore, even if venting gas or the like is generated from the pouch-type battery cell 100, changes in its shape or position may be minimized, and the overall structure of the battery pack 10 may be maintained as it is. Even in situations such as vibration or impact applied to the battery pack 10 or swelling of the pouch-type battery cell 100, the stacked state of the cell cover 200 and the pouch-type battery cell 100 accommodated therein may be maintained stably. Moreover, according to the above embodiment, it is possible to effectively prevent the cell cover 200 from moving in the up-down and left-right directions. In addition, according to the above embodiment, the assembly position of the cell cover 200 may be guided through a fitting configuration between the cell cover 200 and the pack case 300. Therefore, in this case, the assemblability of the battery pack 10 may be further improved.

In addition, two or more cell covers 200 may be included within the battery pack 10, as shown in FIGS. 1, 3, and 4. In this case, adjacent cell covers 200 may be disposed so that side cover portions of the same size face each other. For example, adjacent cell covers 200 may be configured such that small first side cover portions 210 face each other or large second side cover portions 220 face each other.

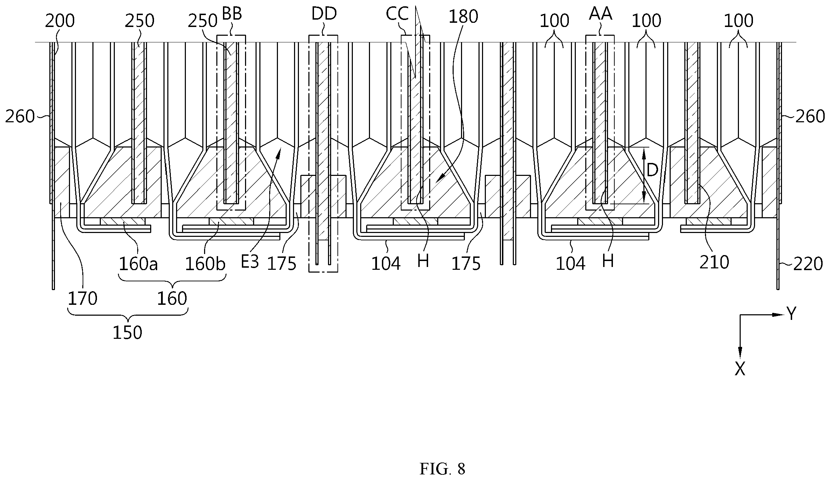

FIG. 8 is a view schematically showing a cross-sectional configuration of the front end part in a state where some components of FIG. 3 are combined.

Referring to FIGS. 4, 6 to 8, the cell cover 200 may be configured such that the end C2 is inserted into the busbar frame assembly 150, particularly the busbar frame 170. Since the busbar frame assembly 150 is located at the front and rear sides of the plurality of pouch-type battery cells 100, respectively, as shown in FIG. 3, the front and rear ends of the cell cover 200 may be inserted into the busbar frame assembly 150 located at the front and rear, respectively.

For example, as indicated by 'AA' in FIG. 8, the end C2 of the cell cover 200 may be inserted into the busbar frame assembly 150. Here, the cell cover 200 may be inserted in a form where the cell cover 200 may or may not penetrate the busbar frame assembly 150. To this end, in the busbar frame assembly 150, particularly the busbar frame 170, an insertion portion H in the form of a groove or hole may be formed so that the end C2 of the cell cover 200 is inserted. The venting gas and/or flame emitted from any one pouch-type battery cell 100 is more reliably prevented from being directed toward the other cell cover 200 by the cell cover 200 inserted into the busbar frame assembly 150.

A lead withdrawal hole 175 is formed in the busbar frame 170 to allow the electrode lead 104 to pass through and be welded to the busbar electrode 160. The insertion portion H may be formed at a location spaced apart from the lead withdrawal hole 175. As shown, the plurality of pouch-type battery cells 100 form, for example, a group of two, so that the electrode leads 104 provided in a pair of pouch-type battery cells 100 belonging to the same group may be withdrawn to the outside through the same lead withdrawal hole 175. In addition, a pair of electrode leads 104 withdrawn to the outside through the lead withdrawal hole 175 are attached to the same busbar electrode 160 by welding or the like. Of course, the number and polarity of the electrode leads 104 withdrawn through one lead withdrawal hole 175 may vary from the example shown here depending on the series and parallel connection relationships of the pouch-type battery cells 100.

The busbar frame 170 may include a plurality of lead guides 180 formed at the lower portion of the lead withdrawal hole 175 and guiding the electrode lead 104 to extend from below the lead withdrawal hole 175 in a direction toward the lead withdrawal hole 175. Preferably, the insertion portion H is formed in the lead guide 180. The lead guide 180 may have a substantially triangular, rectangular, or trapezoidal structure in a cross-section perpendicular to the Z-axis, and the insertion portion H may be formed at a vertex part of the triangle or an upper surface part of the rectangle or trapezoid. In particular, the lead guide 180 may be formed with a structure that is thicker than other parts of the busbar frame 170 or has a wall, and thus, when the insertion portion H is formed in the lead guide 180, the depth D of the insertion portion H may be sufficiently deepened, whereby the cell cover 200 may be inserted and stably maintained.

In this embodiment, the cell cover 200 may be inserted or penetrated into the busbar frame assembly 150 after surrounding one or more pouch-type battery cells 100 or cell banks. Therefore, an independent space is formed between the cell banks, which may prevent direct transfer of venting gas or flame to the cell terrace space located at the front edge portion E3 and the rear edge portion E4.

Therefore, in this case, thermal runaway propagation or the like between the pouch-type battery cells 100 inside the battery pack 10 may be effectively suppressed or delayed. In particular, according to the above embodiment, thermal runaway propagation due to heat convection through the cell terrace space may be effectively prevented.

Moreover, when thermal runaway occurs in a specific pouch-type battery cell 100 within one cell bank, it is possible to effectively respond to the thermal event. Thermal propagation between cell banks may be effectively suppressed or delayed by the cell cover 200.

Meanwhile, venting gas may be guided in a specific direction in an independent space between each cell bank. For example, venting gas may be discharged to the lower side of the cell cover 200 from each independent space. Alternatively, an outlet may be formed in a specific part of the cell cover 200, and venting gas may be discharged to the outside from each independent space through this outlet. Accordingly, the top frame 310 may be protected by preventing venting gas from being discharged to the top frame 310, and heat/flame propagation between cells may be prevented by applying a sealed structure for each cell and bank.

The end (see D1 in FIG. 5) of the thermal barrier 250 together with the cell covers 200 is inserted into the busbar frame assembly 150. In particular, the thermal barrier 250 and the cell cover 200 may be inserted into the same insertion portion H, as shown in 'BB' of FIG. 8. In this case, the thermal barrier 250 may have improved coupling with the cell cover 200. In particular, the cell cover 200 is integral with the thermal barrier 250 and may be inserted into the busbar frame assembly 150 to form a sealed space between cell banks. Since the thermal barrier 250 may be made of a compressible material, isolation between cell banks may be further ensured by tightening the width of the insertion portion H and inserting the thermal barrier 250 in a compressed state.

In the case of conventional battery packs or battery modules, a silicon insulating pad is interposed between battery cells to avoid direct contact between cells, resulting in delaying thermal propagation by conduction, but they may have a structure that is vulnerable to thermal propagation by convection in space. In addition, convection is likely to occur in areas where the electrode leads and the busbar frame assembly exist, and thus, when a thermal event occurs in a specific battery cell, there may be a problem of thermal propagation due to thermal convection on the electrode lead side.

According to the present disclosure, each bank may be sealed by inserting the cell cover 200 into the busbar frame assembly 150. Since thermal propagation due to convection is blocked by the cell cover 200, the battery pack 10 including the cell cover 200 and the busbar frame assembly 150 has improved safety against thermal runaway, fire, explosion, and the like, that is, thermal safety.

As previously mentioned, adjacent cell covers 200 may be configured such that small first side cover portions 210 face each other, or large second side cover portions 220 face each other. In this case, the two first side cover portions 210 facing each other may be inserted into the same insertion portion H of the busbar frame assembly 150, as indicated by 'CC' in FIG. 8. And, the two second side cover portions 220 facing each other may be inserted into the same insertion portion H of the busbar frame assembly 150, as indicated by 'DD' in FIG. 8.

In addition, any one of the first side cover portion 210 and the second side cover portion 220 may be inserted in a form that penetrates the busbar frame assembly 150, and the other one of the first side cover portion 210 and the second side cover portion 220 may be inserted in a form that does not penetrate the busbar frame assembly 150.

For example, as shown in FIG. 8, in each cell cover 200, the second side cover portion 220 may be inserted into the insertion portion H of the busbar frame assembly 150 in a form that penetrates the busbar frame assembly 150 as indicated by 'DD' in FIG. 8. In this case, the insertion portion H into which the second side cover portion 220 is inserted is a hole. In addition, in each cell cover 200, the first side cover portion 210 may be inserted into the insertion portion H of the busbar frame assembly 150 in a form that does not penetrate the busbar frame assembly 150 as indicated by 'CC' in FIG. 8. In this case, the insertion portion H into which the first side cover portion 210 is inserted is a groove.

In addition, depending on the shape of the busbar frame assembly 150 or changes in the connection relationship between the electrode leads 104, the first side cover portion 210 and the second side cover portion 220 may have the same size in some cell covers 200 within the battery pack 10. In the example shown in FIG. 8, eight cell banks are included. The electrode leads 104 of the two pouch-type battery cells 100 in the first cell bank located at the leftmost side are welded to one busbar electrode 160a. The electrode leads 104 of the pouch-type battery cells 100 in the second and third cell banks next to the first cell bank are welded to the same busbar electrode 160b. In the cell covers 200 of the first and third cell banks, the first side cover portion 210 and the second side cover portion 220 have different sizes. In the cell cover 200 of the second cell bank, the first side cover portion 210 and the second side cover portion 220 have the same size.

Meanwhile, one or more battery modules may be accommodated in the battery pack. In this case, the configurations described in the various embodiments described above, such as the configurations of the pouch-type battery cell, the busbar frame assembly, and the cell cover, may also be applied to the battery module.

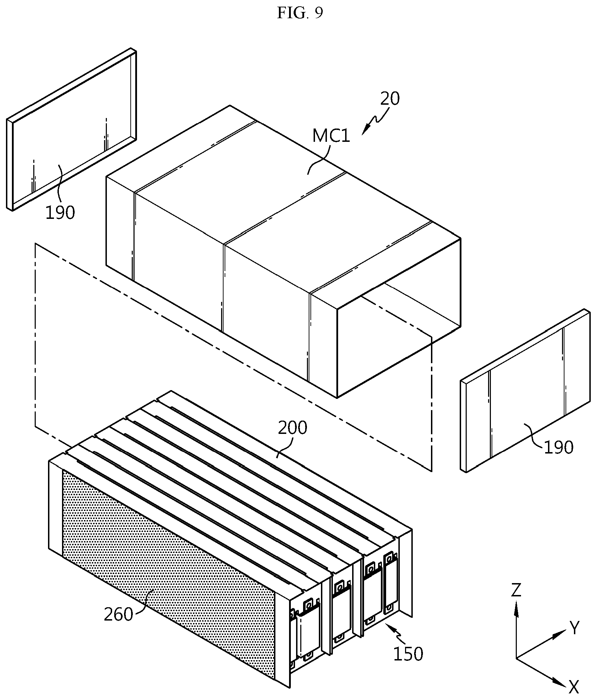

FIG. 9 is a view schematically showing the configuration of a battery module according to an embodiment of the present disclosure.

Referring to FIG. 9, the battery module 20 may be a battery module in which one or more thereof are accommodated in the internal space of the pack case 300 as shown in FIG. 1. The battery module 20 may include a plurality of pouch-type battery cells 100 as described above.

The busbar frame assembly 150 is coupled to at least some of the electrode leads 104 of the plurality of pouch-type battery cells 100. The battery module 20 is provided to at least partially surround at least some of the pouch-type battery cells 100 among the plurality of pouch-type battery cells 100, and a cell cover 200 in which an end C2 is inserted into the busbar frame assembly 150 is also included.

The battery module 20 may include a module case that accommodates a plurality of pouch-type battery cells 100 in an internal space. The module case may be configured to be at least partially open. And, the busbar frame assembly 150 may be configured to be coupled to the opening of the module case. If an insulating cover 190 is further included, the insulating cover 190 may also be configured to be coupled to the opening of the module case.

For example, the module case may include a main body frame MC1. The main body frame MC1 may be configured such that the upper, lower, left, and right sides are closed, and the front and rear sides are open around the internal space. At this time, the upper, lower, left, and right sides may each be configured in the form of a plate, and these four plates may be manufactured in the form of a tube integrated with each other. And, this type of main body frame MC1 may be referred to as a mono frame. In this case, the busbar frame assembly 150 may be coupled to the front and rear openings of the main body frame MC1.

In another example, the module case may include a U-frame and a top plate. The left plate and the right plate may be configured to be integral with the base plate to form the U-frame. The top plate may be coupled to the upper part of the U-frame, and the busbar frame assembly 150 may be coupled to openings at the front and rear ends of the U-frame, respectively.

In addition, since the description of each component of the battery pack 10 according to the present disclosure above may be applied in the same or similar manner to each component of the battery module 20 according to the present disclosure, a detailed description thereof will be omitted.

The battery pack 10 or battery module 20 according to an embodiment of the present disclosure may be applied to various devices. These devices represent transportation means such as electric bicycles, electric vehicles, hybrid vehicles, and the like, but the present disclosure is not limited thereto. The battery pack 10 is suitable for use as a battery pack for electric vehicles. In addition, it can be used as an energy source for an ESS. An ESS refers to a stand-alone system that stores hundreds of kWH or more of power. An ESS is the core of the renewable energy industry. Since it is difficult to generate electricity from renewable energy sources such as solar and wind power at the desired time, it is important to store electricity and make it available at the required time. The battery pack 10 of the present disclosure may have an energy density and capacity suitable for use as an energy source for such an ESS.

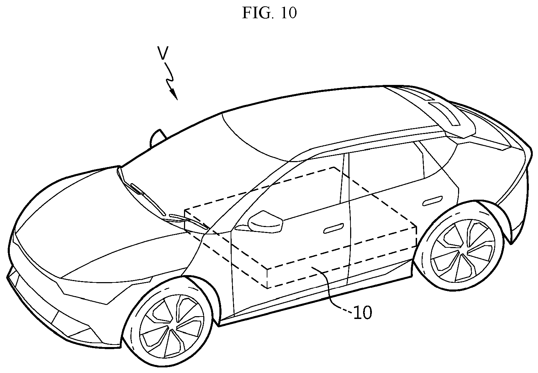

FIG. 10 illustrates a vehicle V according to an embodiment of the present disclosure.

As shown in FIG. 10, a vehicle V according to an embodiment of the present disclosure may include at least one battery pack 10 according to any one of the various embodiments described above.

Here, the vehicle V may include, for example, a predetermined vehicle that uses electricity as a driving source, such as an electric vehicle or a hybrid vehicle. Also, in addition to the battery pack 10 according to the present disclosure, the vehicle V may further include various other components included in the vehicle, such as a vehicle body, a motor, or the like.

The battery pack 10 may be disposed at a predetermined location within the vehicle V. The battery pack 10 may be used as an electrical energy source to drive the vehicle V by providing driving force to the motor of the electric vehicle. In this case, the battery pack 10 has a high nominal voltage of 100 V or more.

The battery pack 10 may be charged or discharged by an inverter depending on the driving of the motor and/or internal combustion engine. The battery pack 10 may be charged by a regenerative charging device coupled to a brake. The battery pack 10 may be electrically connected to the motor of the vehicle V through an inverter.

In this way, the battery pack 10 provided in the vehicle V may provide electrical energy required for various operations of the vehicle V. In addition, since the battery pack 10 has the various effects mentioned above, the vehicle V including it may also have such effects.

As a specific example, the battery pack 10 includes the cell cover 200, so that the module case may be omitted, thereby having high energy density. Energy density refers to the amount of energy stored per unit weight. If the energy density of the battery pack increases, there is more energy stored in the battery pack for the same weight. Therefore, in the case of a vehicle V including such a battery pack 10, it can be used in various ways, such as further increasing the mileage per charge, accelerating faster, loading more luggage, making the interior space larger, and the like. In addition, as the energy density of the battery pack increases, it becomes lighter for the same energy. If the battery pack 10 becomes lighter and the vehicle V including it becomes lighter, this also has various advantages, such as better acceleration, improved energy efficiency, and greater durability.

As another specific example, the battery pack 10 may have a high degree of safety. Since vehicles are directly related to human life, safety is something that can never be compromised. There is always a risk of fire in the pouch-type battery cell 100 due to the physical characteristics of lithium. However, the battery pack 10 according to the present disclosure includes a cell cover 200, so that even if a thermal event occurs in the pouch-type battery cell 100, it may be prevented from being transferred to other parts. Therefore, it is possible to ensure fire safety of the vehicle V including the battery pack 10.

The present disclosure has been described hereinabove with reference to specific embodiments. However, it will be clearly understood to those skilled in the art that various modified embodiments may be implemented within the technical scope of the appended claims. Therefore, the embodiments disclosed above should be considered from an illustrative perspective rather than a limiting perspective. That is, the scope of the true technical idea of the present disclosure is shown in the claims.

Meanwhile, the terms indicating directions as used herein such as upper, lower, left, right, front, and rear are used for convenience of description only, and it is obvious to those skilled in the art that the term may change depending on the position of the stated element or an observer.

### [Explanation of reference signs]

| | |
|---|---|
| 10: battery pack | 20: battery module |
| 100: pouch-type battery cell | 150: busbar frame assembly |
| 160: busbar electrode | 170: busbar frame |
| 180: lead guide | 190: insulating cover |
| 200: cell cover | 210: first side cover portion |
| 220: second side cover portion | 230: upper cover portion |
| 250: thermal barrier | 260: insulating pad |
| 300: pack case | 310: top frame |
| 320: bottom frame | 400: control module |
| H: insertion portion | V: vehicle |

## Claims

1. A battery pack (10) comprising:
a plurality of pouch-type battery cells (100) each having an electrode lead (104);
a busbar frame assembly (150) coupled to at least some of the electrode leads of the plurality of pouch-type battery cells;
a plurality of cell covers (200) arranged side by side and provided to at least partially surround at least some of the pouch-type battery cells among the plurality of pouch-type battery cells, wherein an end thereof is inserted into the busbar frame assembly; and **characterized by**
a thermal barrier (250) interposed between adjacent cell covers, wherein an end of the thermal barrier together with the cell covers is inserted into the busbar frame assembly.

2. The battery pack according to claim 1,
wherein the pouch-type battery cell has a receiving portion (R) in which the electrode assembly is accommodated and an edge portion (E1, E2, E3, E4) around the receiving portion,
wherein the cell covers are configured to surround both sides of the receiving portion and a part of the edge portion of the wrapped pouch-type battery cell.

3. The battery pack according to claim 1,
wherein the cell covers comprise:
a first side cover portion (210) covering one side of the wrapped pouch-type battery cell;
a second side cover portion (220) covering the other side of the wrapped pouch-type battery cell; and
an upper cover portion (230) connecting the first side cover portion and the second side cover portion and covering an upper end part of the wrapped pouch-type battery cell.

4. The battery pack according to claim 3,
wherein the first side cover portion and the second side cover portion are configured to have different sizes.

5. The battery pack according to claim 4,
wherein the adjacent cell covers are disposed so that the first side cover portions having the same size face each other or the second side cover portions having the same size face each other.

6. The battery pack according to claim 4,
wherein any one of the first side cover portion and the second side cover portion is inserted in a form that penetrates the busbar frame assembly, and the other one of the first side cover portion and the second side cover portion is inserted in a form that does not penetrate the busbar frame assembly.

7. The battery pack according to claim 1,
wherein the busbar frame assembly is located at the front and rear sides of the plurality of pouch-type battery cells, respectively, and the front and rear ends of the plurality of cell covers are respectively inserted into the busbar frame assembly.

8. A vehicle (V) comprising a battery pack according to any one of claims 1 to

## Patentansprüche

1. Batteriepack (10), umfassend:
• eine Vielzahl von beutelförmigen Batteriezellen (100), die jeweils eine Elektrodenleitung (104) aufweisen;
• eine Sammelschienenrahmenanordnung (150), die mit mindestens einigen der Elektrodenleitungen der Vielzahl von beutelförmigen Batteriezellen gekoppelt ist;
• eine Vielzahl von Zellenabdeckungen (200), die nebeneinander angeordnet und so bereitgestellt sind, dass sie mindestens einige der beutelförmigen Batteriezellen aus der Vielzahl von beutelförmigen Batteriezellen mindestens teilweise umgeben, wobei ein Ende davon in die Sammelschienenrahmenanordnung eingesetzt ist; und
**gekennzeichnet durch**
• eine thermische Barriere (250), die zwischen benachbarten Zellenabdeckungen angeordnet ist, wobei ein Ende der thermischen Barriere zusammen mit den Zellenabdeckungen in die Sammelschienenrahmenanordnung eingesetzt ist.

2. Batteriepack nach Anspruch 1,
wobei die beutelförmige Batteriezelle einen Aufnahmeabschnitt (R), in dem die Elektrodenanordnung untergebracht ist, und einen Randabschnitt (E1, E2, E3, E4) um den Aufnahmeabschnitt herum aufweist,
wobei die Zellenabdeckungen so konfiguriert sind, dass sie beide Seiten des Aufnahmeabschnitts und einen Teil des Randabschnitts der umhüllten beutelförmigen Batteriezelle umgeben.

3. Batteriepack nach Anspruch 1,
wobei die Zellenabdeckungen umfassen:
• einen ersten Seitenabdeckungsabschnitt (210), der eine Seite der umhüllten beutelförmigen Batteriezelle abdeckt;
• einen zweiten Seitenabdeckungsabschnitt (220), der die andere Seite der umhüllten beutelförmigen Batteriezelle abdeckt; und
• einen oberen Abdeckungsabschnitt (230), der den ersten Seitenabdeckungsabschnitt und den zweiten Seitenabdeckungsabschnitt verbindet und einen oberen Endteil der umhüllten beutelförmigen Batteriezelle abdeckt.

4. Batteriepack nach Anspruch 3,
wobei der erste Seitenabdeckungsabschnitt und der zweite Seitenabdeckungsabschnitt so konfiguriert sind, dass sie unterschiedliche Größen aufweisen.

5. Batteriepack nach Anspruch 4,
wobei die benachbarten Zellenabdeckungen so angeordnet sind, dass die ersten Seitenabdeckungsabschnitte mit der gleichen Größe einander zugewandt sind oder die zweiten Seitenabdeckungsabschnitte mit der gleichen Größe einander zugewandt sind.

6. Batteriepack nach Anspruch 4,
wobei ein beliebiger des ersten Seitenabdeckungsabschnitts und des zweiten Seitenabdeckungsabschnitts in einer Form eingesetzt ist, die die Sammelschienenrahmenanordnung durchdringt, und der andere des ersten Seitenabdeckungsabschnitts und des zweiten Seitenabdeckungsabschnitts in einer Form eingesetzt ist, die die Sammelschienenrahmenanordnung nicht durchdringt.

7. Batteriepack nach Anspruch 1,
wobei sich die Sammelschienenrahmenanordnung jeweils an der Vorder- und Rückseite der Vielzahl von beutelförmigen Batteriezellen befindet, und das vordere und das hintere Ende der Vielzahl von Zellenabdeckungen jeweils in die Sammelschienenrahmenanordnung eingesetzt sind.

8. Fahrzeug (V), umfassend ein Batteriepack nach einem der Ansprüche 1 bis 7.

## Revendications

1. Bloc-batterie (10) comprenant :
• une pluralité de cellules de batterie de type poche (100) ayant chacune une borne d'électrode (104) ;
• un ensemble cadre de barre-bus(150) couplé à au moins certaines des bornes d'électrode de la pluralité de cellules de batterie de type poche ;
• une pluralité de couvercles de cellule (200) disposés côte à côte et prévus pour entourer au moins partiellement au moins certaines des cellules de batterie de type poche parmi la pluralité de cellules de batterie de type poche, dans lequel une extrémité de ceux-ci est insérée dans l'ensemble cadre de barre-bus ; et
**caractérisé par**
• une barrière thermique (250) interposée entre des couvercles de cellule adjacents, dans lequel une extrémité de la barrière thermique conjointement avec les couvercles de cellule est insérée dans l'ensemble cadre de barre-bus.

2. Bloc-batterie selon la revendication 1,
dans lequel la cellule de batterie de type poche comporte une partie de réception (R) dans laquelle l'ensemble d'électrodes est logé et une partie de bord (E1, E2, E3, E4) autour de la partie de réception,
dans lequel les couvercles de cellule sont configurés pour entourer les deux côtés de la partie de réception et une partie de la partie de bord de la cellule de batterie de type poche enveloppée.

3. Bloc-batterie selon la revendication 1,
dans lequel les couvercles de cellule comprennent :
• une première partie de couvercle latérale (210) recouvrant un côté de la cellule de batterie de type poche enveloppée ;
• une seconde partie de couvercle latérale (220) recouvrant l'autre côté de la cellule de batterie de type poche enveloppée ; et
• une partie de couvercle supérieure (230) reliant la première partie de couvercle latérale et la seconde partie de couvercle latérale et recouvrant une partie d'extrémité supérieure de la cellule de batterie de type poche enveloppée.

4. Bloc-batterie selon la revendication 3,
dans lequel la première partie de couvercle latérale et la seconde partie de couvercle latérale sont configurées pour présenter des tailles différentes.

5. Bloc-batterie selon la revendication 4,
dans lequel les couvercles de cellule adjacents sont disposés de sorte que les premières parties de couvercle latérales ayant la même taille se font face ou les secondes parties de couvercle latérales ayant la même taille se font face.

6. Bloc-batterie selon la revendication 4,
dans lequel l'une quelconque de la première partie de couvercle latérale et de la seconde partie de couvercle latérale est insérée sous une forme qui pénètre dans l'ensemble cadre de barre-bus, et l'autre de la première partie de couvercle latérale et de la seconde partie de couvercle latérale est insérée sous une forme qui ne pénètre pas dans l'ensemble cadre de barre-bus.

7. Bloc-batterie selon la revendication 1,
dans lequel l'ensemble cadre de barre-bus est situé au niveau des côtés avant et arrière de la pluralité de cellules de batterie de type poche, respectivement, et les extrémités avant et arrière de la pluralité de couvercles de cellule sont insérées respectivement dans l'ensemble cadre de barre-bus.

8. Véhicule (V) comprenant un bloc-batterie selon l'une quelconque des revendications 1 à 7.
